# NEUE EUROPÄISCHE PATENTSCHRIFT

(11) **EP 0 565 689 B2**
(45) Veröffentlichungstag und Bekanntmachung des Hinweises auf die Entscheidung über den Einspruch: **13.05.1998**
(45) Hinweis auf die Patenterteilung: 17.05.1995
(21) Anmeldenummer: 92922849.2
(22) Anmeldetag: 30.10.1992
(51) Int. Cl.: B60K 15/077

(54) **ANORDNUNG ZUR KRAFTSTOFF-VERSORGUNG EINER BRENNKRAFTMASCHINE**
FUEL SUPPLY ARRANGEMENT FOR AN INTERNAL COMBUSTION ENGINE
AGENCEMENT POUR L'ALIMENTATION EN CARBURANT D'UN MOTEUR A COMBUSTION INTERNE

(30) Priorität: 08.11.1991 DE 4136833
(43) Veröffentlichungstag der Anmeldung: 20.10.1993
(73) Patentinhaber: Bayerische Motoren Werke Aktiengesellschaft, 80788 München (DE)
(72) Erfinder: SCHÜERS, Andreas, D-8912 Kaufering (DE); SCHOLZ, Martin, D-8044 Unterschleissheim (DE); MICHELET, Axel, D-8047 Karlsfeld (DE); WESINGER, Siegfried, D-8080 Fürstenfeldbruck (DE)
(74) Vertreter: Bücken, Helmut
(86) Internationale Anmeldenummer: EP9202498
(87) Internationale Veröffentlichungsnummer: WO9309000

(56) Entgegenhaltungen:
- DE-A- 2 549 104
- DE-A- 2 841 557
- DE-A- 2 928 235
- DE-A- 3 914 939
- JP-A-59 150 967
- US-A- 1 368 475
- US-A- 5 044 344
- PATENT ABSTRACTS OF JAPAN vol. 8, no. 284 (M-348)(1721) 26. Dezember 1984

## Beschreibung

Die Erfindung betrifft eine Anordnung zur Versorgung einer in einem Motorraum angeordneten Brennkraftmaschine mit Kraftstoff, wobei ausgehend von einem außerhalb des Motorraumes befindlichen Kraftstoffbehälter eine eine Pumpe aufweisende Kraftstoff-Vorlaufleitung zur Brennkraftmaschine führt und wobei außerhalb des Motorraumes ein Druckregler vorgesehen ist, der eine zum Kraftstoffbehälter führende Rücklaufleitung mit der Vorlaufleitung verbindet, um in dieser Vorlaufleitung einen gewünschten Kraftstoffdruck einzustellen.

Beispielsweise aus der US 1,368,475 oder aus DE-A-28 41 557 ist eine derartige Anordnung zur Kraftstoff-Versorgung einer Brennkraftmaschine bekannt. Üblicherweise fließt durch die Kraftstoff-Vorlaufleitung wesentlich mehr Kraftstoff, als schließlich in der Brennkraftmaschine benötigt wird, da der Kraftstoff-Volumenstrom durch die üblicherweise konstante Förderleistung der Pumpe bestimmt ist. Die Pumpen-Förderleistung ist dabei so dimensioniert, daß in allen möglichen Brennkraftmaschinen-Betriebspunkten und insbesondere auch im Betriebspunkt der maximalen Nennleistung eine ausreichende Kraftstoffmenge zur Verfügung steht. In Teillast-Betriebspunkten steht daher ein relativ großer, überschüssiger Kraftstoff-Volumenstrom zur Verfügung, der über die Rücklaufleitung in den Kraftstoffbehälter zurückgelangt. Der Druckregler stellt dabei den in die Rücklaufleitung gelangenden Volumenstrom so ein, daß in der Vorlaufleitung ein definierter Kraftstoffdruck anliegt. Dieser Kraftstoff-Überdruck kann dabei entweder gegenüber dem Umgebungsdruck oder gegenüber den Druckverhältnissen in der Sauganlage definiert sein.

Wie aus der obigen Schilderung ersichtlich wird, wird in üblichen Brennkraftmaschinen-Betriebspunkten stets eine nicht unerhebliche Kraftstoffmenge über die Vorlauf- und Rücklaufleitung umgepumpt. Dabei gelangt diese umgepumpte Kraftstoffmenge zumindest bei bei der aus der DE-A-28 41 557 bekannten Anordnung stets durch den durch die Verlustwärme der Brennkraftmaschine erwärmten Motorraum, da die Rücklaufleitung in diesem von der Vorlaufleitung abzweigt. Dies verursacht nicht nur eine Erwärmung des umgepumpten Kraftstoffstromes, sondern führt letztendlich zu einer Temperaturerhöhung des gesamten im Kraftstoffbehälter befindlichen Kraftstoffvolumens. Diese Temperaturerhöhung ist jedoch unerwünscht, da dann leichtflüchtige Kraftstoffbestandteile zur Verdunstung neigen.

Das eben geschilderte Problem tritt dann nicht auf, wenn die Rücklaufleitung von der Vorlaufleitung außerhalb des Motorraumes und insbesondere nahe des Kraftstoffbehälters abzweigt, wie dies bei der Anordnung nach der oben genannten US 1,368,475 realisiert zu sein scheint, insbesondere jedoch bei der JP-A-59-150967 verwirklicht ist. Hiermit stellen sich jedoch andere Probleme ein. Bei stillgesetzter Brennkraftmaschine können sich nämlich durch die Restwärme im Motorraum dort in der Kraftstoff-Vorlaufleitung Dampfblasen bilden, welche bei einem Neustart der Brennkraftmaschine eine sichere Versorgung der Kraftstoff-Einspritzventile mit flüssigem Kraftstoff in Frage stellen, so daß Heißstartprobleme die Folge sein können. Diese Problematik, zu der im übrigen auch auf die DE-A-39 14 939 verwiesen wird, tritt bei der zuerst beschriebenen Anordnung nach der DE-A-28 41 557 nicht auf, da dort bei einem Neustart der Brennkraftmaschine eventuelle Dampfblasen über die Rücklaufleitung weggespült werden.

Aufgabe der Erfindung ist es daher, Maßnahmen aufzuzeigen, mit Hilfe derer eine Erwärmung insbesondere des im Kraftstoffbehälter befindlichen Kraftstoffvolumens durch die Motorraum-Abwärme weitestgehend verhindert wird und welche zugleich keine Heißstartprobleme erzeugen.

Zur Lösung dieser Aufgabe ist vorgesehen, daß in üblichen Brennkraftmaschinen-Betriebspunkten der Druckregler die Vorlaufleitung über eine nahe des Kraftstoffbehälters und somit außerhalb des Motorraumes von der Vorlaufleitung abzweigende Zweigleitung mit der Rücklaufleitung verbindet, und daß insbesondere für einen Heißstart der Brennkraftmaschine über den Druekregler das motorraumseitige Ende der Vorlaufleitung mit der Rücklaufleitung verbindbar ist. Vorteilhafte Weiterbildungen beschreiben die Unteransprüche.

Erfindungsgemäß gelangt im üblichen Betrieb der Brennkraftmaschine der überschüssige, von der Pumpe geförderte Kraftstoffstrom nicht mehr durch den Motorraum, sondern wird bereits außerhalb desselben über eine Zweigleitung von der Vorlaufleitung abgezweigt. Jegliche Erwärmung des in den Kraftstoffbehälter rücklaufenden Kraftstoffvolumens durch die Brennkraftmaschine ist somit weitestgehend ausgeschlossen. Weiter gesteigert werden kann der erfindungsgemäße Effekt, wenn die Zweigleitung und der Druckregler nahe des Kraftstoffbehälters angeordnet sind. Bevorzugt befindet sich die erfindungsgemäße Anordnung in einem Kraftfahrzeug, wobei die Brennkraftmaschine sowie der Motorraum im Fahrzeugbug und der Kraftstoffbehälter im Fahrzeugheck untergebracht sind. Sind dann der Druckregler sowie die Zweigleitung ebenfalls im Fahrzeugheck angeordnet, so ist auch eine Erwärmung durch Umgebungseinflüsse nahezu ausgeschlossen.

Um zusätzlich die genannten Heißstartprobleme auszuschließen, ist der Druckregler alternativ zur Zweigleitung mit dem motorraumseitigen Ende der Vorlaufleitung verbindbar. Diese Verbindung zwischen Druckregler und motorraumseitigem Ende der Vorlaufleitung wird dann beim Start der Brennkraftmaschine kurzzeitig hergestellt, um das motorraumseitige Ende der Vorlaufleitung, von dem die Kraftstoff-Einspritzdüsen abzweigen, intensiv zu spülen und somit mögliche Kraftstoff-Dampfblasen zu entfernen. Ist dieser Spülvorgang beendet, so wird wiederum die außerhalb des Motorraumes und insbesondere nahe des Kraftstoffbehälters von der Vorlaufleitung abzweigende Zweigleitung mit dem Druckregler verbunden, sowie die Verbindung zwischen Druckregler und motorraumseitigem Ende der Vorlaufleitung unterbrochen. Hierzu kann ein einfaches Umschaltventil vorgesehen sein.

Anhand einer Prinzipskizze wird ein bevorzugtes Ausführungsbeispiel einer erfindungsgemäßen Kraftstoff-Versorgungsanordnung für ein Kraftfahrzeug im folgenden erläutert. Mit 1 ist ein Kraftfahrzeug bezeichnet, dessen Bug einen abgeschlossenen Motorraum 2 aufweist, in dem eine das Kraftfahrzeug 1 antreibende Brennkraftmaschine 3 angeordnet ist. Im Heck des Kraftfahrzeuges 1 ist ein Kraftstoffbehälter 4 angeordnet. Aus diesem Kraftstoffbehälter 4 wird die Brennkraftmaschine 3 über eine Vorlaufleitung 5 mit Kraftstoff versorgt.

Im einzelnen ist die Brennkraftmaschine 3 mit einer Kraftstoff-Einspritzleiste 6 versehen, die über die Vorlaufleitung 5 mit Kraftstoff versorgt wird und somit quasi das motorraumseitige Ende der Vorlaufleitung 5 bildet. Von dieser Einspritzleiste 6 zweigen die den einzelnen Zylindern der Brennkraftmaschine zugeordneten Einspritzventile 7 ab, die in der Sauganlage 8 der Brennkraftmaschine 3 münden. Für eine einwandfreie Funktion dieser Einspritzventile 7 muß in der Einspritzleiste 6 ein definierter Kraftstoffdruck anliegen. Eingestellt wird dieser Kraftstoffdruck mittels eines Druckreglers 9, der über eine Zweigleitung 10 die Vorlaufleitung 5 mit einer drucklos im Kraftstoffbehälter 4 mündenden Rücklaufleitung 11 verbindet. Somit wird ein überschüssiger, von der Kraftstoff-Pumpe 12 geförderter Kraftstoffstrom einfach abgezweigt, um in der Einspritzleiste 6 das gewünschte Druckniveau herzustellen. Da im vorliegenden Fall dieses gewünschte Druckniveau als Differenzdruck gegenüber den in der Sauganlage 8 herrschenden Druckverhältnissen definiert ist, wird der Druckregler 9 über eine Druckleitung 13 zusätzlich mit dem in der Sauganlage 8 herrschenden Druck beaufschlagt.

Die Zweigleitung 10, die von der Vorlaufleitung 5 über ein später noch erläutertes Umschaltventil 14 zum Druckregler 9 und über diesen sowie über die Rücklaufleitung 11 zum Kraftstoffbehälter 4 führt, ist ebenso wie der Druckregler 9 außerhalb des Motorraumes 2 und insbesondere in der Nähe des Kraftstoffbehälters 4 angeordnet.
Hierdurch wird eine unerwünschte Erwärmung des überschüssigen, von der Pumpe 12 geförderten und über die Zweigleitung 10 sowie die Rücklaufleitung 11 umgepumpten Kraftstoffvolumens vermieden. Jedoch kann es erwünscht sein, bei einem Start der Brennkraftmaschine 3 kurzfristig ein großes Kraftstoffvolumen durch die Einspritzleiste 6 zu fördern, um eventuelle Kraftstoff-Dampfblasen, die sich dort während der Stillstandsphase der Brennkraftmaschine gebildet hatten, wegzuspülen. Daher ist die Einspritzleiste 6 mit ihrem der Vorlaufleitung 5 abgewandten Ende und somit auch das motorraumseitige Ende der Vorlaufleitung 5 über eine Spülleitung 15 alternativ zur Zweigleitung 10 mit dem Druckregler 9 verbindbar. Diese alternative Verbindung erfolgt mittels des Umschaltventiles 14. Anschließend an einen Start der Brennkraftmaschine 3 gelangt somit kurzfristig die gesamte von der Pumpe 12 geförderte Kraftstoffmenge über die Einspritzleiste 6, jedoch kann binnen kurzer Zeit das Umschaltventil 14 in die andere Position gebracht werden und somit für den Dauerbetrieb der Brennkraftmaschine 3 die Zweigleitung 10 mit dem Druckregler 9 sowie der Rücklaufleitung 11 verbunden werden. Wie bereits ausführlich erläutert, wird mit dieser Maßnahme eine unnötige Erwärmung insbesondere des im Kraftstoffbehälter 4 befindlichen Kraftstoffvolumens vermieden und somit ein unerwünschtes Ausgasen flüchtiger Kraftstoffbestandteile reduziert. Dabei sind durchaus Abweichungen von der erläuterten Prinzipskizze möglich, ohne den Inhalt der Patentansprüche zu verlassen.

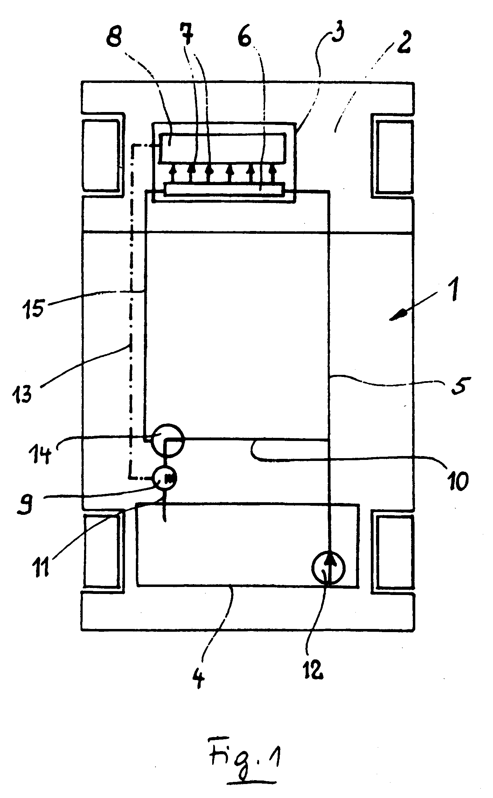

## Patentansprüche

1. Anordnung zur Versorgung einer in einem Motorraum (2) angeordneten Brennkraftmaschine (3) mit Kraftstoff, wobei ausgehend von einem außerhalb des Motorraumes (2) befindlichen Kraftstoffbehälter (4) eine eine Pumpe (12) aufweisende Kraftstoff-Vorlaufleitung (5) zur Brennkraftmaschine (3) führt und wobei außerhalb des Motorraumes (2) ein Druckregler (9) vorgesehen ist, der eine zum Kraftstoffbehälter (4) führende Rücklaufleitung (11) mit der Vorlaufleitung (5) verbindet, um in dieser Vorlaufleitung (5) einen gewünschten Kraftstoffdruck einzustellen,
dadurch gekennzeichnet, daß in üblichen Brennkraftmaschinen-Betriebspunkten der Druckregler (9) die Vorlaufleitung (5) über eine nahe des Kraftstoffbehälters (4) und somit außerhalb des Motorraumes (2) von der Vorlaufleitung (5) abzweigende Zweigleitung (10) mit der Rücklaufleitung (11) verbindet,
und daß insbesondere für einen Heißstart der Brennkraftmaschine (3) über den Druckregler (9) das motorraumseitige Ende der Vorlaufleitung (5) mit der Rücklaufleitung (11) verbindbar ist.

2. Anordnung nach Anspruch 1,
dadurch gekennzeichnet, daß bezüglich der Rücklaufleitung (11) stromauf des Druckreglers (9) ein Umschaltventil (14) vorgesehen ist, über welches der Druckregler (9) entweder mit der Zweigleitung (10) oder mit einer mit dem motorraumseitige Ende der Vorlaufleitung (5) verbundenen Spülleitung (15) verbindbar ist.

3. Anordnung nach Anspruch 1 oder 2,
dadurch gekennzeichnet, daß der Druckregler (9) pneumatisch mit einer Sauganlage (8) der Brennkraftmaschine (3) verbunden ist, um an den in der Sauganlage (8) mündenden, von der Vorlaufleitung (5) mit Kraftstoff versorgten Einspritzventilen (7) eine gewünschte Kraftstoffdruckdifferenz gegenüber dem in der Sauganlage (8) herrschenden Druck einzustellen.

## Claims

1. An arrangement for the supply of fuel to an internal combustion engine (3) arranged in an engine compartment (2), wherein a fuel supply line (5) provided with a pump (12) leads from a fuel tank (4) outside the engine compartment (2) to the internal combustion engine (3), and wherein a pressure regulator (9) provided outside the engine compartment (2) connects the supply line (5) to a return line (11) leading to the fuel tank (4) in order to set a desired fuel pressure in the supply line (5), characterised in that, in usual internal combustion engine operating modes of the pressure regulator (9), the supply line (5) is connected to the return line (11) through the branch line (10) branching off from the supply line (5) near the fuel tank (4) and therefore outside the engine compartment (2), and that, especially for a hot start of the internal combustion engine (3), the end of the supply line (5) at or adjacent the engine compartment is connectable to the return line (11) through the pressure regulator (9).

2. An arrangement according to claim 1, characterised in that the return line (11) is provided with a respective switching valve (14) upstream of the pressure regulator (9), whereby the pressure regulator (9) is connectable either with the branch line (10) or with a purge line (15) connected to the end of the supply line (5) at or adjacent the engine compartment.

3. An arrangement according to claim 1 or claim 2, characterised in that the pressure regulator (9) has a fluid-flow connection with a suction system (8) of the internal combustion engine (3) whereby a desired differential fuel pressure with respect to the pressure obtaining in the suction system (8) is established in injection valves (7) opening into the injection system and supplied with fuel by the supply line (5).

## Revendications

1. Dispositif d'alimentation en carburant d'un moteur à combustion interne (3) disposé dans un compartiment de moteur (2), moteur dans lequel une conduite d'amenée de carburant (5) comprenant une pompe (12) et partant d'un réservoir de carburant (4) se trouvant à l'extérieur du compartiment de moteur (2), conduit au moteur à combustion interne (3), et dans lequel est prévu, en dehors du compartiment du moteur (2), un régulateur de pression (9) qui met en communication avec la conduite d'amenée (5), une conduite de retour (11) conduisant au réservoir de carburant (4), dans le but d'ajuster une pression de carburant désirée dans la conduite d'amenée (5),
caractérisé en ce que
- dans des points de fonctionnement usuels du moteur à combustion interne, le régulateur de pression (9) met en communication la conduite d'amenée (5) avec la conduite de retour (11) au moyen d'une conduite en dérivation (10) de la conduite d'amenée (5), près du réservoir de carburant (4) et donc en dehors du compartiment de moteur (2), et
- particulièrement pour un démarrage à chaud du moteur à combustion interne, l'extrémité du côté moteur de la conduite d'amenée (5) peut être reliée à la conduite de retour (11).

2. Dispositif selon la revendication 1,
caractérisé en ce que
concernant la conduite de retour (11), une vanne d'inversion (14) est prévue en amont du régulateur de pression (9) par l'intermédiaire de laquelle le régulateur de pression (9) peut être relié soit avec la conduite de dérivation (10), soit avec une conduite de rinçage (15) reliée à l'extrémité du côté compartiment du moteur de la conduite d'amenée (5).

3. Dispositif selon la revendication 1 ou 2,
caractérisé en ce que
le régulateur de pression (9) est relié pneumatiquement à une installation d'aspiration (8) du moteur à combustion interne (3), pour ajuster aux injecteurs (7) débouchants dans l'installation d'aspiration (8), alimentés en carburant par la conduite d'amenée (5) une différence de pression de carburant désirée par rapport à la pression régnant dans l'installation d'aspiration (8).
